# EUROPEAN PATENT SPECIFICATION

(11) **EP 4 064 543 B1**
(45) Date of publication and mention of the grant of the patent: **17.09.2025**
(21) Application number: 21164038.8
(22) Date of filing: 22.03.2021
(51) Int. Cl.: H02M 3/335, H02M 1/00

(54) **CONTROLLER FOR A FORWARD MODE CURRENT INJECTION CONVERTER, FORWARD MODE CURRENT INJECTION CONVERTER AND CORRESPONDING METHOD**
STEUERGERÄT FÜR EINEN VORWÄRTSMODUS-STROMINJEKTIONSWANDLER, VORWÄRTSMODUS-STROMINJEKTIONSWANDLER UND ENTSPRECHENDES VERFAHREN
ORGANE DE COMMANDE POUR CONVERTISSEUR D'INJECTION DE COURANT EN MODE AVANT, CONVERTISSEUR D'INJECTION DE COURANT EN MODE AVANT ET PROCÉDÉ CORRESPONDANT

(43) Date of publication of application: 28.09.2022
(73) Proprietor: Infineon Technologies Austria AG, 9500 Villach (AT)
(72) Inventor: KIM, Hyunmin, 587877 Singapore (SG); CHANG, Ching-Tao, 828754 WaterTown (SG); LUO, Junyang, 120359 Singapore (SG)
(74) Representative: Kraus & Lederer PartGmbB

(56) References cited:
- US-A1- 2010 110 732
- US-A1- 2015 194 896
- US-A1- 2018 198 374
- US-A1- 2020 169 180

## Description

### TECHNICAL FIELD

The present application relates to controllers for forward mode current injection (FMCI) converters, FMCI converters and corresponding methods.

### BACKGROUND

Power converters are generally used to convert an input electrical power (voltage, current) to an output electrical power (voltage, current) and may for example operate as voltage converter to convert an input voltage like a mains voltage to an output voltage required by a specific load.

One class of power converters are switched mode power supplies (SMPS), where a primary side switch is operated to selectively provide power ultimately to an output of the converter. Some types of SMPS use a galvanic isolation provided by a transformer, where the primary side switch selectively provides power to a primary winding of a transformer, with a secondary winding of the transformer being coupled to an output of the SMPS. As primary side switches in SMPS, frequently transistors like metal oxide semiconductor field effect transistors (MOSFETS) or other transistor types are used.

In this case, often so called zero voltage switching (ZVS) is employed, where a switching of the primary side switch from an off-state to an on-state is performed at a time where only a comparatively small voltage, ideally zero volt, but in practical implementations sometimes some few volts, is applied across the primary side switch, for example between source and drain terminals in case of a MOSFET.

Different approaches to establish such a zero voltage switching are conventionally known. In forward mode current injection converters, an auxiliary switch, referred to as zero voltage switching transistor herein, is coupled to an auxiliary primary side winding of the transformer and to a capacitor, and is switched on shortly before the primary side switch is switched on to establish zero voltage switching.

Prior art is provided by:
US2020/169180A1,
US2018/198374A1,
US2010/110732A1.

### SUMMARY

A forward mode current injection converter as defined in claim 1 and a method as defined in claim 8 are provided. The dependent claims define further embodiments.

According to an embodiment, a controller for a forward mode current injection converter is provided, comprising:
an input to receive a measure of a period of a current through a zero voltage switching transistor of the forward mode current injection converter, and
control logic configured to set an on-time of the zero voltage switching transistor based on the measure.

In another embodiment, a forward mode current injection converter including such a controller as provided.

According to a further embodiment, a method for controlling a forward mode current injection converter is provided, comprising:
receiving a measure of a period of a current through a zero voltage switching transistor of the forward mode current injection converter,
setting an on-time of the zero voltage switching transistor based on the measure.

The above summary is merely intended to provide a brief overview over some embodiments and is not to be construed as limiting, as other embodiments may include other features than the ones given above.

### BRIEF DESCRIPTION OF THE DRAWINGS

Fig. 1 is a circuit diagram of a forward mode current injection converter according to some embodiments.
Fig. 2 is a block diagram illustrating a controller according to some embodiments.
Fig. 3 is a flow chart illustrating a method according to some embodiments.
Figs. 4A to 4C are diagrams illustrating different operation phases of a zero voltage switching transistor.
Figs. 5A to 5C are diagrams illustrating some embodiments.
Figs. 6A to 6C are diagrams illustrating some embodiments.
Figs. 7A and 7B are diagrams illustrating some embodiments.

### DETAILED DESCRIPTION

In the following, various embodiments will be described in detail referring to the attached drawings. These embodiments are given as examples only and are not to be construed as limiting in any way. For example, while embodiments may be described comprising a plurality of features (components, circuit elements, acts, events, steps, etc.), in other embodiments some of the features may be omitted, and/or may be replaced by alternative features or elements. In addition to the features explicitly described, further features may be provided. For example, embodiments discussed herein relate to setting an on-time for a zero voltage switching transistor of a forward mode current injection (FMCI) converter. Apart from this setting of an on-time, the FMCI converter may be implemented in any conventional manner, and such conventional implementation details will not be described here in detail.

Different embodiments may be combined with each other to form further embodiments unless noted otherwise. Variations and modifications described with respect to one of the embodiments may also be applicable to other embodiments and will therefore not be described repeatedly.

In the embodiments shown and described, any direct electrical connection or coupling between elements, i.e. connections or couplings without intervening elements, may be replaced by an indirect connection or coupling, i.e. connection or coupling comprising one or more additional intervening elements, and vice versa, as long as the general purpose of the connection or coupling, for example to provide a certain kind of signal, a certain kind of information or a certain kind of control, is essentially maintained. In other words, connections or couplings may be modified as long as the general purpose and function of the connection or coupling remains essentially unaltered.

Embodiments discussed herein use transistors as switches. While in embodiments discussed here in metal oxides semiconductor field effect transistors (MOSFETS) are used as examples, in other embodiments other kinds of transistors, for example bipolar junction transistors (BJTs) or insulated gate bipolar transistors (IGBTs), may be used. Transistors may be based on different semiconductor materials like silicon, silicon carbide or III-V semiconductors like gallium arsenide or gallium nitride. A switch, for example transistor, is on or closed when it provides a low ohmic connection between terminals thereof (source and drain terminals or collector and emitter terminals), and it is described as off or open in a state where it provides essentially an electric isolation between the terminals (apart possibly from some undesired leaked currents, which are generally orders of magnitudes lower than currents in the on state).

Any signals shown in the drawings or values given for components like resistance values, capacitance values etc., are to be taken merely as examples, as actual signal waveforms may vary depending on a particular implementation, and values for components may be changed.

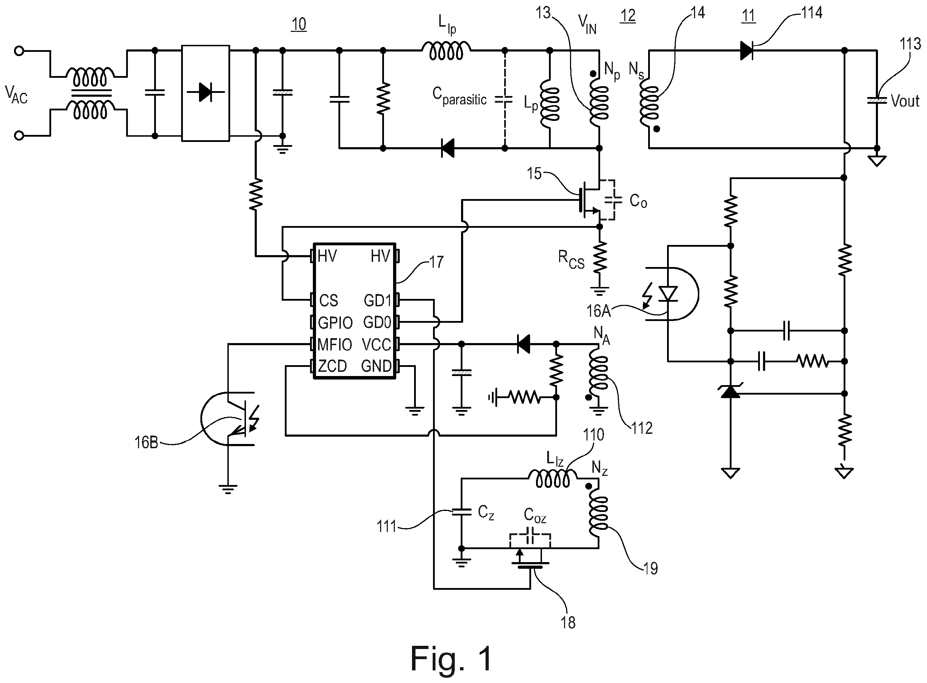

Turning now to the figures, Fig. 1 is a circuit diagram of a forward mode current injection (FMCI) converter according to an embodiment. Apart from a control of an on-time of a zero voltage switching transistor 18 by a controller 17, the FMCI converter of Fig. 1 may be implemented in any conventional manner, and the configuration shown is only an example. Therefore, the converter of Fig. 1 will be described comparatively briefly below.

The FMCI converter of Fig. 1 includes a primary side 10 and a secondary side 11 separated by a transformer 12. In the example of Fig. 1, primary side 10 receives an AC input voltage VAC, for example a mains voltage, which is rectified and filtered to provide a voltage V_{IN}. A primary transistor switch 15, when switched on, causes a current flow through a primary side winding 13 of transformer 12, which transfers energy to a secondary side winding 14 of transformer 12, which provides an output voltage Vout at an output capacitor 113. Primary side transistor switch 15 is controlled by a control signal GD0 from a controller 17. A feedback network provides feedback of the output voltage via an optocoupler 16A, 16B to controller 17, which may control switching of primary transistor switch 15 to establish a desired output voltage Vout.

Furthermore, a first auxiliary winding 112 on the primary side on the one hand serves for providing controller 17 with power at a VCC input and further provides information regarding a current through the transformer/primary side transistor switch 15 at an input ZCD of controller 17.

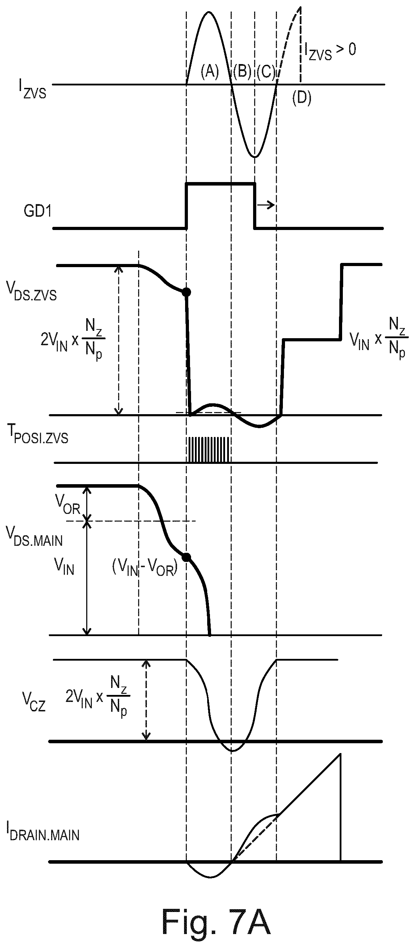

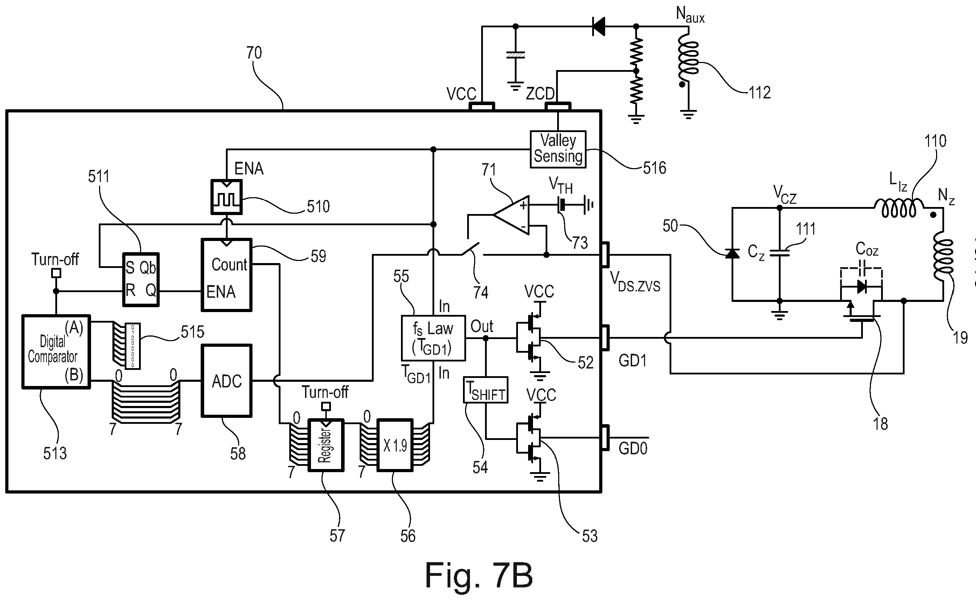

A second auxiliary winding 19, an inductor 110 and a capacitor 111 (also referred to as C_{Z}) form a resonant circuit, in which a zero voltage switching transistor 18 is provided. Second auxiliary winding 19, as indicated by the dot, has the same winding direction as primary side winding 13, whereas first auxiliary winding 112 and secondary side winding 14 have the opposite winding direction of primary winding 13. Zero voltage switching transistor 18 is switched on shortly before primary transistor switch 15 is switched on in each switching cycle. The energy injection through auxiliary winding 19 then causes zero voltage switching when switching on primary transistor switch 15. The time when the zero voltage switching transistor 18 is switched on may depend on a mode the converter is operated and may for example be at valley of a drain source voltage of the primary transistor switch 15, which may be measured at input ZCD in Fig. 7 based on a signal from first auxiliary winding 112, or may be with a fixed frequency.

N_{P}, N_{A}, N_{Z} and N_{S} denote a number of winding of 13, first auxiliary winding 112, second auxiliary winding 19 and secondary winding 14, respectively.

As described so far, the embodiment of Fig. 1 and operation thereof corresponds to a conventional operation of an FMCI converter and will therefore not be described in more detail.

As will be explained below in more detail, in conventional solutions zero voltage switching transistor 18, after being turned on, remains turned on for a preconfigured, fixed time.

In various embodiments discussed herein, instead of that, controller 17 receives a measure of a period of a current through zero voltage switching transistor 18. A measure of a period of a current refers to any value, signal or quantity which includes information regarding a time duration of a period of the current through zero voltage switching transistor 18. Various examples for such a measure will be discussed below in more detail. The time during which the zero voltage switching transistor 18 is switched on, also referred to as on-time of zero voltage switching transistor 18, is then determined by controller 17 based on this measure, and zero voltage switching transistor 18 is controlled accordingly. Also for this, more detailed examples will be given further below.

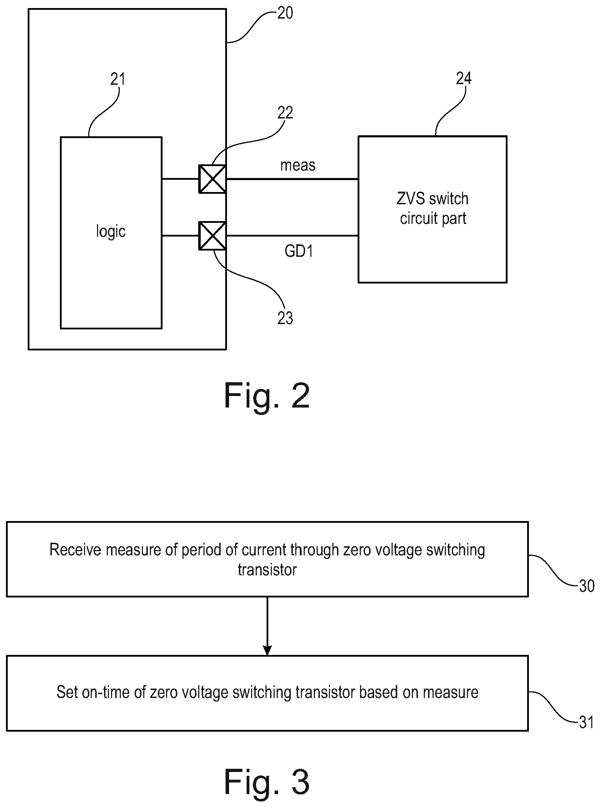

For further illustration, Fig. 2 shows a controller 20 according to an embodiment. Only parts of controller 20 relevant to the control of zero voltage switching transistor 18 are shown, and other parts of controller 20 may be implemented in any conventional manner.

Controller 20 includes a terminal 21 configured to receive a measure meas of the period of the current through a zero voltage switching transistor from a zero voltage switch circuit part 24. In the example of Fig. 1, zero voltage switch circuit part 24 includes components 19, 110, 111. A control logic 24 processes this measure meas and controls a zero voltage switching transistor of the circuit part 24 using a signal GD1 accordingly, with a corresponding on-time based on the measure.

Fig. 3 is a flow chart illustrating a method according to an embodiment, which may be implemented in controller 20 of Fig. 2 or controller 17 of Fig. 1, and for ease of explanation will be described referring to the description 1 and 2 above. At 30, the method of Fig. 3 comprises receiving a measure of a period of a current through a zero voltage switching transistor, like zero voltage switching transistor 18 of Fig. 1. At 31, the method includes setting an on-time of the zero voltage switching transistor based on the measure. The method of Fig. 3 may for example be performed by control logic 21, which may include hardware components to perform the method. Examples for such hardware components will be described below. In other embodiments, the method may also be fully or partially implemented in software running on a controller like a programmable micro controller.

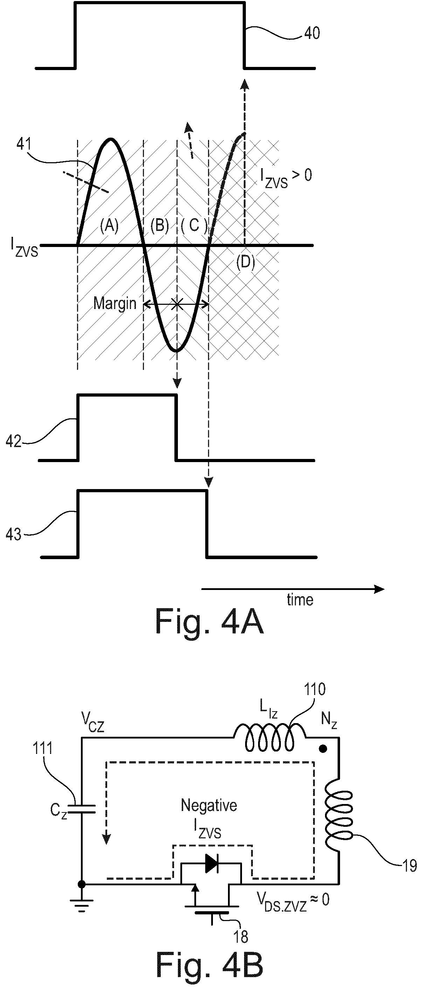

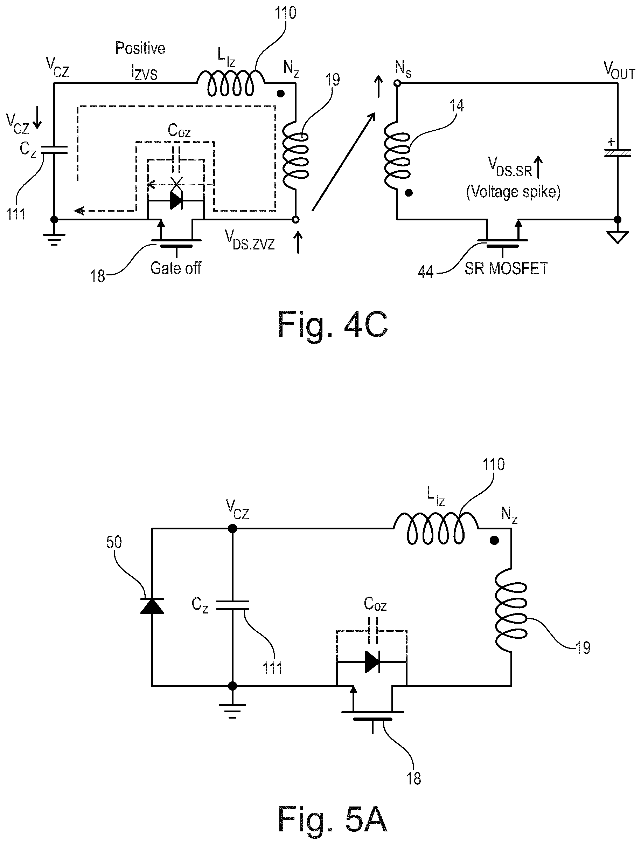

Next, conditions for setting the on-time of a zero voltage switching transistor like transistor 18 in Fig. 1 will be discussed referring to Fig. 4, including subfigures 4A to 4C. Fig. 4A shows example signals, Fig. 4B shows a current in an area (C) of Fig. 4 in a zero voltage switch circuit part, and Fig. 4C shows a current in an area (D) of Fig. 4.

As an example for a zero voltage switch part, in Figs. 4B and 4C the corresponding circuit parts of Fig. 1 including zero voltage switching transistor 18, second auxiliary winding 19, inductor 110 and capacitor 111 is used.

A curve 31 in Fig. 1 shows a current I_{ZVS} through zero voltage switching transistor 18. Upon switching on zero voltage switching transistor 18, first due to stored energy in the resonant circuit formed by capacitor 111, second auxiliary winding 19 and inductor 110, a positive half wave of the current I_{ZVS} occurs in a region (A). A positive current, in this respect, is a current from capacitor 111 through inductor 110 and auxiliary secondary winding 19 and then back to capacitor 111 through zero voltage switching transistor 18, and a negative current as a current in the opposite direction, as shown in Fig. 4D for a negative current and Fig. 4C for a positive current. Then, the current I_{ZVS} becomes negative in a quarter wave in an area (B) and a further quarter wave in an area (C), before becoming positive again in an area (D).

An on-time of the zero voltage switching transistor 18 which extends into area (D), as shown as an example in a curve 40 illustrating a control signal GD1 extending to area (D), is undesirable for reason illustrated in Fig. 4C. Here, a positive current flows through zero voltage transistor 18 being switched on, causing a rise of the drain source voltage VDS.ZVS of zero voltage switching transistor 18. This, as indicated by in Fig. 4C, may cause a voltage spike at a secondary side of the FMCI converter, for example as at a synchronal rectifying (SR) method 44 on the secondary side, through induction in secondary winding 14. Such voltage spikes may damage e.g. a synchronous rectifier MOSFET 44 or require a stronger design of synchronous rectifier MOSFET 44, which increases costs. The voltage spike occurring is related to charging the intrinsic capacitances of the zero voltage switching transistor if the zero voltage switching transistor is turned off while I_{ZVS} is positive. The spike explained here for synchronous rectifier MOSFET 44 may also occur at other rectifying elements, for example a rectifying diode 114 on secondary side 11 shown in Fig. 1. In contrast, if the zero voltage switching transistor is switched off while I_{ZVS} is negative, no such spike occurs

In conventional solutions, a fixed duration of the on-time of zero voltage switching transistor 18 is used, which may be pre-programmed in a respective controller. Such an on-time as illustrated by a curve 42 in Fig. 4A showing a control signal GD1 causing a fixed on-time. In some conventional approaches, the on-time is set to end nominally at the boundary between areas (B) and (C), i.e. at the minimum of I_{ZVS}. "Nominally" means that this time is set for nominal values of various circuit components like capacitates of capacitor 111, inductances of inductors 110, 19, parasitic capacitances of zero voltage switching transistor 18 etc. This choice provides a safety margin against the current reaching area (D). In particular, the period length of I_{ZVS} varies with variations of the above mentioned values like capacitance value of capacitor 111, inductance values of inductors 110, 19 and any parasitic capacitances or inductances in the system like process, voltage or temperature variations (PVT variations). Therefore, a safety margin has to be set.

On the other hand, this has the disadvantage that the zero voltage switching transistor 18 is switched off at least during most of area (C) and possibly also some of area (B), depending on the above mentioned variations. This in turn means that a body diode has to be provided to zero voltage switching transistor 18 either as an intrinsic diode or as an additional freewheeling diode by design, through which current may flow for example in area (C) when zero voltage switching transistor 18 is switched off. Current conduction through a body diode generally generates more losses than conduction through switched on zero voltage switching transistor 18.

Therefore, in embodiments, as already briefly explained referring to Figs. 1 to 3, a period of the current I_{ZVS} is obtained, and the on-time is adapted based on the measure. In this way, variations of the period may be taken into account, the on-time may be extended essentially to the boundary between areas (C) and (D), as illustrated by a curve 43 in Fig. 4A showing an example adaptive control signal GD1. For example, the on-time may be set to the full period length (2 half periods), possibly minus a safety margin like minus 5% or minus 10% or minus a fixed time to ensure that the zero voltage switching transistor is securely switched off at the beginning of area (D).

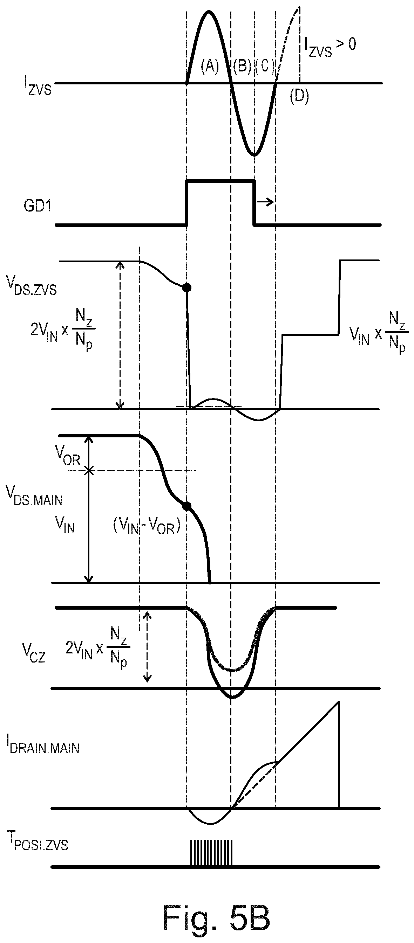

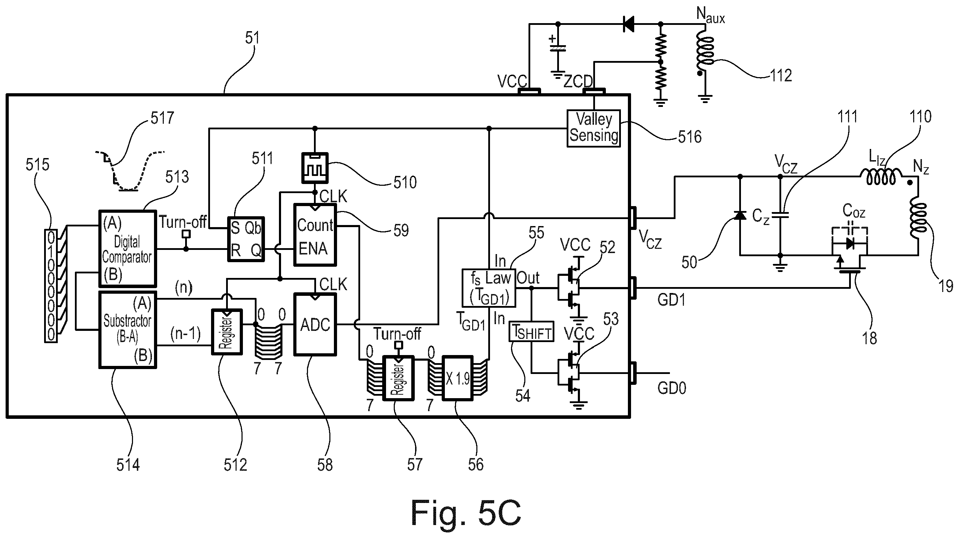

In a first approach, to obtain a measure of the period of the current through the zero voltage switching transistor, a voltage across a capacitor of the zero voltage switch circuit part used is monitored, in the example of Fig. 1 capacitor 111. This will be explained referring to Fig. 5 including subfigures 5A to 5C.

Fig. 5A shows a corresponding zero voltage switch circuit part for this approach. In addition to components 18, 19, 110 and 111 already discussed, a diode 50 is additionally provided, which allows current flow in case of a positive current I_{ZVS} (for definitions of positive and negative current, see the explanations above with reference to Fig. 4B and 4C). In other words, the diode 50 provides negative clamping. In some implementations, this helps to avoid negative voltages at a terminal of a controller that receives the voltage across capacitor 111 as the measure. For sufficiently large capacitances of capacitor 111, the voltage across capacitor 111 usually does not drop below 0 (e.g. VSS) , and in such implementations diode 50 may be omitted. Otherwise, if in some conditions the voltage may drop below 0 without diode 50, diode 50 prevents this by clamping the voltage accordingly.

Fig. 5B illustrates various signals used for explaining the first approach using a voltage across capacitor 111 as the measure. In Fig. 5B, I_{ZVS} is the current through the zero voltage switching transistor 18, as already represented as curve 51 in Fig. 4A. GD1 is the control signal for the zero voltage switching transistor, where an on-time is adapted according to techniques discussed herein.

V_{DS.ZVS} denotes a drain source voltage of zero voltage switching transistor 18. As indicated in Fig. 5B, the amplitude of this voltage depends on the input voltage V_{IN} and the winding ratio N_{Z}/N_{P}, wherein a maximum value is V_{IN}(N_{Z}/N_{P}).

VDS.main denotes a drain source voltage of the primary transistor switch, like primary transistor switch 15 of Fig. 1. This voltage is reduced by the action of the zero voltage switch circuit part before the primary transistor switch is switched on. V_{OR} is the output voltage Vout refelcted back to the primary side via transformer 12. I_{DRAIN.MAIN} is a current through the primary transistor switch.

Of particular interest to the measure discussed here with reference to Figs. 5A to 5C is V_{CZ}, which is the voltage across capacitor 111. The voltage starts at V_{IN}(N_{Z}/N_{P}), then drops ad then rises again. A minimum of V_{CZ}, as can be seen in Fig. 5B, corresponds to the boundary between regions (A) and (B). Therefore, a time duration between switching on the zero voltage switching transistor and this minimum corresponds to half the period of the current I_{ZVS} through zero voltage switching transistor 18. Consequently, V_{CZ} may serve as a measure of the period of the current through zero voltage switching transistor 18. For example, as indicated by a signal T_{POSI.ZVS}, a counter may start at the switching on of the zero voltage switching transistor, and stop when the minimum of the V_{CZ} is reached. To detect the minimum, the derivative dV_{CZ}/dt with respect to time or an approximation thereof may be continuously calculated, and when the derivative is below a predefined value (at or close to zero), this may be seen as the minimum being reached.

Fig. 5C is a circuit diagram illustrating a controller 51 adapted for controlling the zero voltage switching transistor 18 with a signal GD1 and a primary transistor switch like primary transistor switch 15 of Fig. 1 with a signal GD0 based on sensing the voltage V_{CZ}. Fig. 5C shows the zero voltage switch circuit part already discussed with reference to Fig. 5A, with components 18, 19, 110, 111 and 50. The voltage V_{CZ} across capacitor 111 is received by controller 51 at an input terminal also labeled V_{CZ}. Controller 51 includes a first driver 52, in the example shown a push-pull driver for driving zero voltage switching transistor 18 with signal GD1, and a second driver 53 for driving a primary transistor switch like primary transistor switch 50 of Fig. 1 with a signal GD0.

Furthermore, as already explained briefly with respect to Fig. 1, controller 51 receives a supply voltage VCC derived from first auxiliary winding 112, and further receives a voltage ZCD derive from a voltage at first auxiliary winding 112 via a resistive divider, as shown.

The voltage received at input ZCD is indicative of the drain source voltage of the primary transistor switch, V_{DS.MAIN} in Fig. 5B. A valley in voltage received at input ZCD, which corresponds to the point V_{IN}-V_{OR} in V_{DS.MAIN}, is detected by a valley sensing 516, which may be implemented in a conventional manner, for example by monitoring the slope of the received signal.

When a valley is detected by valley sensing 516 a corresponding signal is provided to a control logic 55 that controls first and second drivers 52, 53. The receipt of the signal from valley sensing 516 by control logic 55 causes control logic 55 to control first driver 51 to switch zero voltage switching transistor 18 on, and with a delay T_{SHIFT} caused by a delayed block 54 control second driver 53 to switch the primary transistor switch like primary transistor switch 15 of Fig. 1 on. Furthermore the signal from valley sensing 116 switches an oscillator 510 on, which generates a clock signal with a frequency fs clocking a counter 59 and an analog to digital converter (ADC) 58. Finally, the signal from valley sensing 516 is provided to a set input of a set/reset flip-flop 511. This starts counting of counter 59 with frequency fs. The frequency fs may be set by controller 17 or 20 based on feedback from the secondary side, e.g. at terminal MFIO aif controller 17, to measure the period as explained below with sufficent resolution.

The voltage V_{CZ} is provided to an analog to digital converter (ADC) 58 for conversion to digital value. As an example, in Fig. 5C in various instances 8 bit values are indicated (bits 0 to 7), but this is merely an example. Any suitable analog to digital converters like tracking analog to digital converters or sigma delta analog to digital converters may be used. For each clock period, the converted value of V_{CZ} is stored in a register 512. In a next clock period, this value from register 512 is provided to an input (B) of a subtractor 514, and an actual value (one clock cycle later than the value stored in register 512) is provided to an input (A) of subtractor 514. In other words, in an n-th clock cycle the n-th value output by ADC 58 is provided to input (A) of subtractor 514, and the previous (n-1)-th value is provided to input (B) of subtractor 514. Subtractor 514 calculates the difference between the values, for example the (n-1)-th value minus the n-th value, and feeds the output to an input (B) of a digital comparator 514. In this way, subtractor 514 approximates a value for the derivative dV_{CZ}/dt, by calculating the difference for one clock period. This is illustrated in a curve 517, where this difference is shown for two instances.

The digital comparator 514 compares the signal received from subtractor 514 with a constant 515 received at an input (A) of digital comparator 514. When the output from subtractor 514 is below the constant, this is taken as an indication that the valley of V_{CZ} has been reached. In other words, the constant is a small value, which when reached, indicates that the slope of the V_{CZ} has essentially reached zero. When this is the case, digital comparator 514 outputs a signal to a reset input R of set/reset flip-flop 514.

An output Q of set/reset flip-flop 511 is coupled to an enable input of counter 59. When valley sensing 516 applies a signal to the set input of set/reset flip-flop 511, this causes counter 59 to be enabled and to start counting.

Application of the signal from digital comparator 513 to reset input R of set/reset flip-flop 511 causes output Q to toggle and therefore to stop counting of counter 59. Therefore, counter 59 then outputs the time from switching on zero voltage switching transistor 18 to the valley of V_{CZ} in terms of clock periods of clock signal CLK, which time, as can be seen in Fig. 5B, corresponds to half the period of I_{ZVS}. The counting of counter 59 symbolized by signal T_{POSI.ZVS} in Fig. 5D. The value thus output by counter 59 is stored in register 57 and multiplied by a factor in a multiplier 56. A multiplication by 2 would corresponds to the full period of I_{ZVS}. To provide some safety margin as explained above, the factor may be chosen slightly lower than 2, for example 1.9 in Fig. 5C. The result of multiplier 56 is provided to control logic 55, which controls first driver 52 to switch off zero voltage switching transistor 18 off after the time T_{GD1} indicated by the output of multiplier 56. In this way, the on-time of zero voltage switching transistor 18 is set to almost the full period of I_{ZVS}, and can be adapted to variations due to processing variations, temperature variations, parasitic capacitances, etc.

It should be noted that the circuit shown in controller 51 for measuring the time from switching on of zero voltage switching transistor 18 to the valley based on V_{CZ} is merely an example, and other circuits also may be used. For instance, elements downstream of analog to digital converter 58, like register 512, subtractor 514, digital comparator 514, etc. it may be implemented in hardware, but also may be implemented in software processing digital values. Moreover, as indicated, by applying signals "turn off" to register 57 and to a node between digital comparator 514 and set/reset flip-flop 511, the determination may be turned off. This turn-off may deactivate the counter for GD1 when a voltage V_{DS.ZVS} reaches its valley, or may deactivate the counter 59 after the measurement, i.e. when the counting has stopped, for the remaining resonant period (e.g. essentially after area (A)). In implementations like the one of Fig. 5 or implementations discussed below where essentially half the period of the current is measured, the measurement may therefore be deactivated for the other half period.

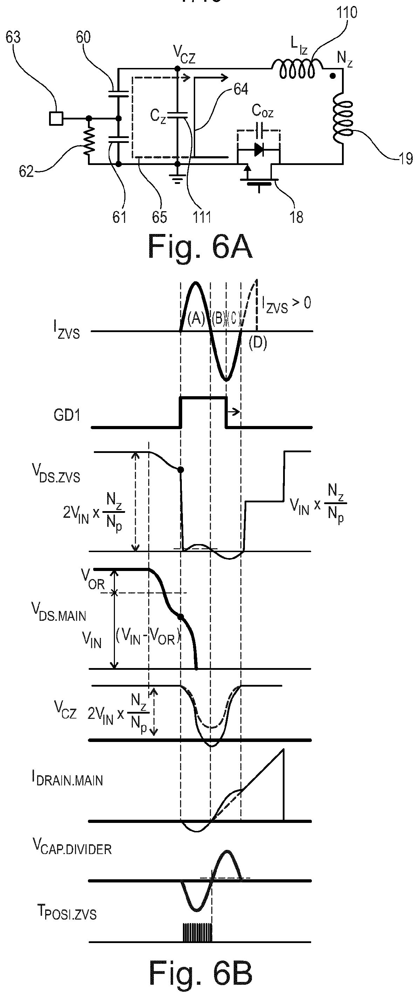

Next, a further example for a measure for the period of I_{ZVS} will be discussed, referring to Figs. 6A to 6C. As will be seen, some elements in the embodiments of Figs. 6A to 6C are similar to the embodiment of Fig. 5A to 5C, bear the same reference numerals and therefore will not be described in full detail again.

Also in the case of Fig. 6A to 6C the measurement is based on the voltage V_{CZ}. However, in this case, the voltage is not used directly, but a capacitive divider is used to obtain a measure of the period of I_{ZVS}.

Fig. 6A shows a zero voltage switch circuit part according to a corresponding embodiment.

The zero voltage switch part of Fig. 6A includes components 18, 19, 110 and 111 are already discussed. Parallel to capacitor 111, a capacitive divider including a first capacitor 60 and a second capacitor 61 couples in series, with a resister 62 coupled in parallel to second capacitor 61, is provided. A node between first capacitor 60 and second capacitor 61 is coupled to a terminal 63, at which the divider voltage as a measure for the period of I_{ZVS} may be tapped. To give example values, capacitor 111 may have a capacitance of about 10nF, first capacitor 60 may have a capacitance of about 68pF, second capacitor 61 may have a capacitance of about 4.7nF, and resistor 62 may have a resistance value of 1 Ohm. Other values are also possible.

In embodiments, a capacitance value of the series connection between first and second capacitor 60, 61 is at least one order of magnitude, for example about two orders of magnitude, smaller than the capacitance of capacitor 111, as in the numerical example above, which conversely means that an impedance of a path via capacitor 111 is significantly smaller than an impedance of a path via the capacitive divider including first and second capacitors 60, 61 and resistor 62. This in turn means that a current indicated by an arrow 64 through capacitor 111 is significantly larger than a current indicated by an arrow 65 through the capacitive divider, which in turn means that the influence of the capacitive divider on the operation of the zero voltage switch circuit part shown is low.

Fig. 6B illustrates example signals for the currently discussed embodiment using a capacitive divider. Most of the signals have already been explained with reference to Fig. 5B and have the same designations. In addition to the signals of Fig. 5B, Fig. 6B shows a voltage V_{CAP.DIVIDER}, which is an example voltage at terminal 63 of Fig. 6A. As can be seen, the voltage has an oscillating behavior, with a sign opposite to I_{ZVS}. In embodiments, a time from switching on zero voltage switching transistor 18 until the voltage V_{CAP.DIVIDER} crossing 0, i.e. transitioning from negative to positive, or in other words V_{CAP.DIVIDER} becoming positive, may be detected detected. This time period may be measured by a counter in terms of clock signals, as indicated by T_{POSI.ZVS}, and the time corresponds to half the period of I_{ZVS}.

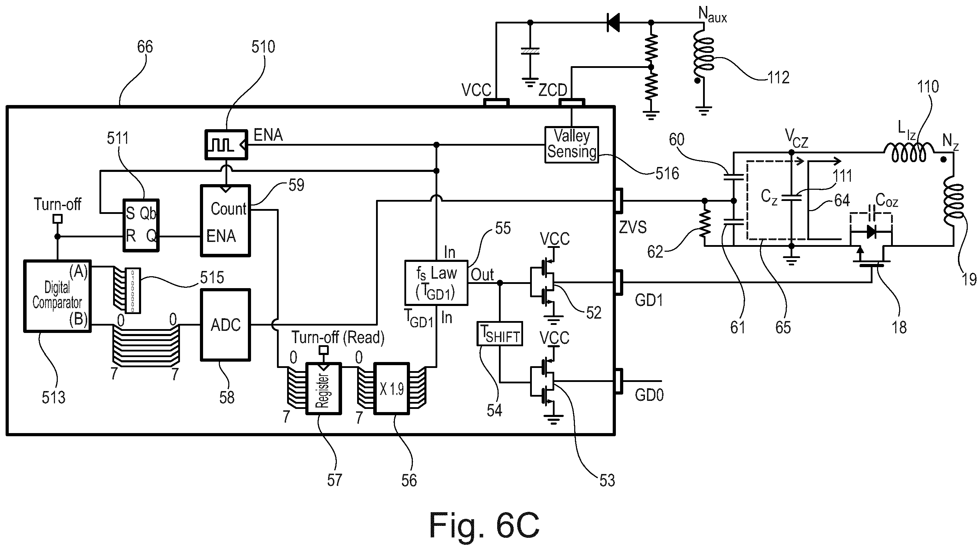

Fig. 6C illustrates a controller 66 implemented for taking an output voltage of a capacitive divider as a measure of the period of I_{ZVS}. Elements having the same function as explained with reference to Figs. 5C bear the same reference numerals. In particular, also controller 66 receives a supply voltage from first auxiliary winding 112 and receives the voltage ZCD from the resistive divider coupled to first auxiliary winding 112, and performs a valley sensing 516, which using control logic 55 switches zero voltage switching transistor 18 on by controlling first driver 52 accordingly, and switching a primary transistor switch on using second driver 53 with a time delay 54.

Furthermore, valley sensing 516 switches oscillator 510 for providing a clock signal on, and applies a signal to a set input S of set/reset flip-flop 511 already described, which starts counting of counter 59.

Furthermore, ADC 58 in this case receive the signal from the capacitive divider of the zero voltage switch part already shown in Fig. 6A and reproduced in Fig. 6C at an input ZVS. The resulting digital value is compared to a constant 515 in a digital comparator 513. In this case, the constant 515 may be zero or close to zero, to detect when the voltage output by the capacitive divider becomes positive. As in Fig. 5C, the output of digital comparator 513 is provided to a reset input R of set/reset flip-flop 511 to stop counting of counter 59. Also in this case, the output of counter 59 measures half the period of I_{ZVS} in terms of clock periods of the clock signal generated by oscillator 510. The output of counter 59 is then processed as in Fig. 5C using register 57 and multiplier 56.

Therefore, also the output by the capacitive divider may be taken as a measure of the period I_{ZVS}.

A further embodiment illustrating a further measure which may be used is illustrated in Figs. 7A and 7B. In this approach, the drain source voltage of the zero voltage switching transistor is used as a measure of the period of I_{ZVS}. For this, essentially the same zero voltage switch circuit part as shown in Fig. 5A including diode 50 may be used, which therefore will not be reproduced again.

Fig. 7A reproduces the signals shown in Fig. 5B. In the currently discussed embodiment, the focus is on the voltage V_{DS.ZVS}. As can be seen, this voltage during the period of I_{ZVS} exhibits a similar oscillation, with a zero crossing from positive to negative at the transition between areas (A) and (B). To ensure correct timing, the zero voltage switching transistor therefore may only be switched off while V_{DS.ZVS} is negative. Half a period of I_{ZVS} may be measured by measuring the time from switching on the zero voltage switching transistor to V_{DS.ZVS} becoming negative.

Fig. 7B shows a diagram of a controller 70 adapted to use the drain source voltage of zero voltage switching transistor 18 as a measure for the time period of I_{ZVS}. Similar to Fig. 6C, elements already described with reference to Figs. 5C or 6C bear the same reference numerals and will not be discussed again in detail. For instance, also controller 70 receives a supply voltage from first auxiliary winding 112 and includes valley sensing 516 based on which oscillator 510 is switched on, zero voltage switching transistor 18 and a primary transistor switch like primary transistor switch 15 of Fig. 1 are switched on via first and second drivers 52, 52 by control logic 55 using delay 54 for switching on the primary transistor switch, and valley sensing 516 furthermore applies a signal to a set input of set/reset flip-flop 511 starting counter 59.

Furthermore, for measuring the drain source voltage of zero voltage switching transistor 18, controller 17 receives a voltage V_{DS} from a node between zero voltage switching transistor 18 and second auxiliary winding 19, which corresponds to the drain source voltage of zero voltage switching transistor 18 with respect to ground.

This voltage is compared to a threshold V_{TH} generated by a voltage source 73 by a comparator 71, and a switch 74 allowing further processing of the voltage V_{DS.ZVS} by analog to digital converter 58 and following elements is only closed when the voltage V_{DS.ZVS} is below V_{TH}. For example, V_{TH} is selected to be smaller than V_{IN} x N_{Z}/N_{P} as in Fig. 7A, such that the actual detection and sensing only occurs in the phase when the drain source voltage is at low value in the oscillating part in Fig. 8A. Comparator 71 may save power by turning on oscillator

The voltage V_{DS.ZVS} is then digitized by analog to digital converter 58. The thus digitized value is compared to a constant 515 in digital comparator 513 to detect when V_{DS.ZVS} becomes negative. Therefore, threshold 515 may be at or close to zero. As can be seen, due to the phase shift introduced by the capacitive divider, in Fig. 6C a transition from negative to positive is to be detected, while in Fig. 7B a transition from positive to negative is detected.

The remaining processing is the same as already explained, i.e. the output of counter 59 is provided to register 57 and multiplied by a factor by multiplier 56 to determine the on-time for zero voltage switching transistor 18.

As can be seen from the explanations in Figs. 5 to 7, there are various ways of obtaining a measure of the period of the current I_{ZVS} through zero voltage switching transistor 18.

The scope of the invention is defined by the appended claims.

## Claims

1. A forward mode current injection converter, comprising:
a transformer (12), a capacitor (111), a primary transistor switch (15) coupled to selectively provide energy to a primary winding (13) of the transformer (12), a primary side zero voltage switching transistor (18) coupled to an auxiliary winding (19) on the primary side of the transformer (12) and to the capacitor (111), and
a controller (17; 20; 51; 66; 70) configured to control the primary transistor switch (15) and the zero voltage switching transistor (18), such as to switch on the zero voltage switching transistor (18) shortly before the primary transistor switch (15) is switched on, and such as to enable zero voltage switching of the primary transistor switch (15), **characterized by**
the controller (17; 20; 51; 66; 70) comprising:
an input (22) configured to receive a measure of a period of a current through the zero voltage switching transistor (18) of the forward mode current injection converter, and
control logic (21) configured to set an on-time of the zero voltage switching transistor (18) based on the measure,
wherein:
- the measure indicates a voltage across the capacitor (111) coupled in series with the zero voltage switching transistor (18), wherein the controller is configured to set the on-time based on a time from switching on of the zero voltage switching transistor (18) until a minimum of the voltage across the capacitor; or
- the measure indicates an output voltage of a capacitive divider (60, 61) comprised in the forward mode current injection converter and coupled in parallel to the capacitor (111) that is coupled in series to the zero voltage switching transistor (18), wherein the controller is configured to set the on-time based on a time between switching on of the zero voltage switching transistor (18) and the output voltage of the capacitive divider (60, 61) becoming positive; or
- the measure indicates a voltage across the zero voltage switching transistor (18), wherein the controller is configured to set the on-time based on a time during which the voltage across the zero voltage switching transistor (18) is positive.

2. The forward mode current injection converter of claim 1, wherein the control logic (21) is configured to set the on-time to within +/- 10% of the period of the current.

3. The forward mode current injection converter of claim 1 or 2, wherein the control logic (21) is configured to set the on-time to the period of the current minus a predefined safety margin.

4. The forward mode current injection converter of any one of claims 1 to 3, wherein the measure of the period of the current indicates the duration of half of the period of the current.

5. The forward mode current injection converter of any one of claims 1 to 4, wherein the measure indicates the voltage across the capacitor (111) coupled in series with the zero voltage switching transistor (18), and the input (22) of the controller is coupled to the capacitor (111) to receive the voltage across the capacitor (111) as the measure.

6. The forward mode current injection converter of any one of claims 1 to 4, wherein the measure indicates the output voltage of the capacitive divider (60, 61) coupled in parallel to the capacitor (111) that is coupled in series to the zero voltage switching transistor (18), wherein the input (22) of the controller (17; 20; 51; 66; 70) is coupled to an output (63) of the capacitive divider (60, 61).

7. The forward mode current injection converter of any one of claims 1 to 4, wherein the measure indicates the voltage across the zero voltage switching transistor (18), and wherein the input (22) of the controller (17; 20; 51; 66; 70) is coupled to a node between the zero voltage switching transistor (18) and the auxiliary winding (19).

8. A method for controlling a forward mode current injection converter that comprises a primary transistor switch (15) coupled to selectively provide energy to a primary winding (13) of a transformer (12), and that comprises a primary side zero voltage switching transistor (18), the method comprising:
receiving a measure of a period of a current through the primary side zero voltage switching transistor (18), wherein the zerc voltage switching transistor (18) is coupled to an auxiliary winding (19) on the primary side of the transformer (12) and to a capacitor (111), and enabling zero voltage switching of the primary transistor switch (15) by switching the zero voltage switching transistor (18) on shortly before the primary transistor switch (15) is switched on, and by setting an on-time of the zero voltage switching transistor (18) based on the measure,
wherein:
- the measure indicates a voltage across the capacitor (111) coupled in series with the zero voltage switching transistor (18), wherein setting the on-time comprises setting the on-time based on a time from switching on of the zero voltage switching transistor (18) until a minimum of the voltage across the capacitor; or
- the measure indicates an output voltage of a capacitive divider (60,61) coupled in parallel to the capacitor (111) that is coupled in series to the zero voltage switching transistor (18), wherein setting the on-time comprises setting the on-time based on a time between switching on of the zero voltage switching transistor (18) and the output voltage of the divider becoming positive; or
- the measure indicates a voltage across the zero voltage switching transistor (18), wherein setting the on-time comprises setting the on-time based on a time during which the voltage across the zero voltage switching transistor (18) is positive.

## Patentansprüche

1. Vorwärtsmodus-Strominjektionswandler, umfassend:
einen Transformator (12), einen Kondensator (111),
einen Primärtransistorschalter (15), der gekoppelt ist, um selektive einer Primärwicklung (13) des Transformators(12) Energie bereitzustellen, einen primärseitigen Nullspannungsschalttransistor (18), der mit einer Hilfswicklung (19) auf der Primärseite des Transformators (12) und mit dem Kondensator (111) gekoppelt ist, und
eine Steuerung (17; 20; 51; 66; 70), die konfiguriert ist, um den Primärtransistorschalter (15) und den Nullspannungsschalttransistor (18) zu steuern, um den Nullspannungsschalttransistor (18) kurz vor dem Einschalten des Primärtransistorschalters (15) einzuschalten, und um ein Nullspannungsschalten des Primärtransistorschalters (15) zu ermöglichen, **dadurch gekennzeichnet, dass**
die Steuerung (17; 20; 51; 66; 70) umfasst:
einen Eingang (22), der konfiguriert ist, um ein Maß einer Periode eines Stroms durch den Nullspannungsschalttransistor (18) des Vorwärtsmodus-Strominjektionswandlers zu empfangen, und
eine Steuerlogik (21), die konfiguriert ist, um eine Einschaltzeit des Nullspannungsschalttransistors (18) basierend auf dem Maß einzustellen,
wobei:
- das Maß eine Spannung über dem Kondensator (111) anzeigt, der in Reihe mit dem Nullspannungsschalttransistor (18) gekoppelt ist, wobei die Steuerung konfiguriert ist, um die Einschaltzeit basierend auf einer Zeit vom Einschalten des Nullspannungsschalttransistors (18) bis zu einem Minimum der Spannung über dem Kondensator einzustellen; oder
- das Maß eine Ausgangsspannung eines kapazitiven Teilers (60, 61) anzeigt, der in dem Vorwärtsmodus-Strominjektionswandler enthalten und parallel zu dem Kondensator (111) gekoppelt ist, der in Reihe mit dem Nullspannungsschalttransistor (18) gekoppelt ist, wobei die Steuerung konfiguriert ist, um die Einschaltzeit basierend darauf einzustellen, dass eine Zeit zwischen dem Einschalten des Nullspannungsschalttransistors (18) und der Ausgangsspannung des kapazitiven Teilers (60, 61) positiv wird; oder
- das Maß eine Spannung über dem Nullspannungsschalttransistor (18) anzeigt, wobei die Steuerung konfiguriert ist, um die Einschaltzeit basierend auf einer Zeit einzustellen, während der die Spannung über dem Nullspannungsschalttransistor (18) positiv ist.

2. Vorwärtsmodus-Strominjektionswandler nach Anspruch 1, wobei die Steuerlogik (21) konfiguriert ist, um die Einschaltzeit auf innerhalb von +/- 10 % der Periode des Stroms einzustellen.

3. Vorwärtsmodus-Strominjektionswandler nach Anspruch 1 oder 2, wobei die Steuerlogik (21) konfiguriert ist, um die Einschaltzeit auf die Periode des Stroms minus einer vordefinierten Sicherheitsspanne einzustellen.

4. Vorwärtsmodus-Strominjektionswandler nach einem der Ansprüche 1 bis 3, wobei das Maß der Periode des Stroms die Dauer der Hälfte der Periode des Stroms angibt.

5. Vorwärtsmodus-Strominjektionswandler nach einem der Ansprüche 1 bis 4, wobei das Maß die Spannung über dem Kondensator (111) anzeigt, der in Reihe mit dem Nullspannungsschalttransistor (18) gekoppelt ist, und der Eingang (22) der Steuerung mit dem Kondensator (111) gekoppelt ist, um die Spannung über dem Kondensator (111) als das Maß zu empfangen.

6. Vorwärtsmodus-Strominjektionswandler nach einem der Ansprüche 1 bis 4, wobei das Maß die Ausgangsspannung des kapazitiven Teilers (60, 61) anzeigt, der parallel zu dem Kondensator (111) gekoppelt ist, der in Reihe mit dem Nullspannungsschalttransistor (18) gekoppelt ist, wobei der Eingang (22) der Steuerung (17; 20; 51; 66; 70) mit einem Ausgang (63) des kapazitiven Teilers (60, 61) gekoppelt ist.

7. Vorwärtsmodus-Strominjektionswandler nach einem der Ansprüche 1 bis 4, wobei das Maß die Spannung über dem Nullspannungsschalttransistor (18) anzeigt, und wobei der Eingang (22) der Steuerung (17; 20; 51; 66; 70) mit einem Knoten zwischen dem Nullspannungsschalttransistor (18) und der Hilfswicklung (19) gekoppelt ist.

8. Verfahren zum Steuern eines Vorwärtsmodus-Strominjektionswandlers, der einen Primärtransistorschalter (15) umfasst, der gekoppelt ist, um selektiv einer Primärwicklung (13) eines Transformators (12) Energie bereitzustellen, und der einen primärseitigen Nullspannungsschalttransistor (18) umfasst, wobei das Verfahren umfasst:
Empfangen eines Maßes einer Periode eines Stroms durch den primärseitigen Nullspannungsschalttransistor (18), wobei der Nullspannungsschalttransistor (18) mit einer Hilfswicklung (19) auf der Primärseite des Transformators (12) und mit einem Kondensator (111) gekoppelt ist, und Ermöglichen eines Nullspannungsschaltens des Primärtransistorschalters (15) durch Einschalten des Nullspannungsschalttransistors (18) kurz bevor der Primärtransistorschalter (15) eingeschaltet wird, und durch
Einstellen einer Einschaltzeit des Nullspannungsschalttransistors (18) basierend auf dem Maß, wobei:
- das Maß eine Spannung über dem Kondensator (111) anzeigt, der in Reihe mit dem Nullspannungsschalttransistor (18) gekoppelt ist, wobei das Einstellen der Einschaltzeit das Einstellen der Einschaltzeit basierend auf einer Zeit vom Einschalten des Nullspannungsschalttransistors (18) bis zu einem Minimum der Spannung über dem Kondensator umfasst; oder
- das Maß eine Ausgangsspannung eines kapazitiven Teilers (60, 61) anzeigt, der parallel zu dem Kondensator (111) gekoppelt ist, der in Reihe mit dem Nullspannungsschalttransistor (18) gekoppelt ist, wobei das Einstellen der Einschaltzeit das Einstellen der Einschaltzeit basierend darauf umfasst, dass eine Zeit zwischen dem Einschalten des Nullspannungsschalttransistors (18) und der Ausgangsspannung des Teilers positiv wird; oder
- das Maß eine Spannung über dem Nullspannungsschalttransistor (18) anzeigt, wobei das Einstellen der Einschaltzeit das Einstellen der Einschaltzeit basierend auf einer Zeit umfasst, während der die Spannung über dem Nullspannungsschalttransistor (18) positiv ist.

## Revendications

1. Un convertisseur d'injection de courant en mode avant, comprenant :
un transformateur (12), un condensateur (111), un interrupteur (15) primaire de transistor monté pour donner sélectivement de l'énergie à un enroulement (13) primaire du transformateur (12), un transistor (18) de commutation à tension zéro du côté primaire connecté à un enroulement (19) auxiliaire du côté primaire du transformateur (12) et au condensateur (111), et
une unité (17 ; 20 ; 51 ; 66 ; 70) de commande configurée pour commander l'interrupteur (15) de transistor primaire et le transistor (18) de commutation à tension zéro, de manière à débloquer le transistor (18) de commutation à tension zéro peu avant que l'interrupteur (15) de transistor primaire soit fermé, et de manière de fermer à tension zéro l'interrupteur (15) de transistor primaire, **caractérisé en ce que**
l'unité (17 ; 20 ; 51 ; 66 ; 70) de commande comprend :
une entrée (22) configurée pour recevoir une mesure d'une période du courant dans le transistor (18) de commutation à tension zéro du convertisseur d'injection de courant en mode avant, et
une logique (21) de commande configurée pour fixer un temps de déblocage du transistor (18) de commutation à tension zéro sur la base de la mesure,
dans lequel :
- la mesure indique une tension aux bornes du condensateur (111) monté en série avec le transistor (18) de commutation à tension zéro, dans lequel l'unité de commande est configurée pour fixer le temps de déblocage sur la base d'un temps allant du déblocage du transistor (18) de commutation à tension zéro jusqu'à un minimum de la tension aux bornes du condensateur ; ou
- la mesure indique une tension de sortie d'un diviseur (60, 61) capacitif compris dans le convertisseur d'injection de courant en mode avant et monté en parallèle avec le condensateur (111), qui est monté en série avec le transistor (18) de commutation à tension zéro, dans lequel l'unité de commande est configurée pour fixer le temps de déblocage sur la base d'un temps entre le déblocage du transistor (18) de commutation à tension zéro et la tension de sortie du diviseur (60, 61) capacitif devenant positive ; ou
- la mesure indique une tension aux bornes du transistor (18) de commutation à tension zéro, dans lequel l'unité de commande est configurée pour fixer le temps de déblocage sur la base d'un temps pendant lequel la tension aux bornes du transistor (18) de commutation à tension zéro est positive.

2. Le convertisseur d'injection de courant en mode avant de la revendication 1, dans lequel la logique (21) de commande est configurée pour fixer le temps de déblocage dans +/- 10 % de la période du courant.

3. Le convertisseur d'injection de courant en mode avant de la revendication 1 ou 2, dans lequel la logique (21) de commande est configurée pour fixer le temps de déblocage à la période du courant moins une marge de sécurité définie à l'avance.

4. Le convertisseur d'injection de courant en mode avant de l'une quelconque des revendications 1 à 3, dans lequel la mesure de la période du courant indique la durée d'une demi-période du courant.

5. Le convertisseur d'injection de courant en mode avant de l'une quelconque des revendications 1 à 4, dans lequel la mesure indique la tension aux bornes du condensateur (111) monté en série avec le transistor (18) de commutation à tension zéro et l'entrée (22) de l'unité de commande est connectée au condensateur (111) pour recevoir la tension aux bornes du condensateur (111) comme mesure.

6. Le convertisseur d'injection de courant en mode avant de l'une quelconque des revendications 1 à 4, dans lequel la mesure indique la tension de sortie du diviseur (60, 61) capacitif monté en parallèle avec le condensateur (111), qui est monté en série avec le transistor (18) de commutation à tension zéro, dans lequel l'entrée (22) de l'unité (17 ; 20 ; 51 ; 66 ; 70) de commande est connectée à une sortie (63) du diviseur (60, 61) capacitif.

7. Le convertisseur d'injection de courant en mode avant de l'une quelconque des revendications 1 à 4, dans lequel la mesure indique la tension aux bornes du transistor (18) de commutation à tension zéro, et dans lequel l'entrée (22) de l'unité (17 ; 20 ; 51 ; 66 ; 70) de commande est connectée à un nœud entre le transistor (18) de commutation à tension zéro et l'enroulement (19) auxiliaire.

8. Un procédé de commande d'un convertisseur d'injection de courant en mode avant, qui comprend un interrupteur (15) de transistor primaire, monté pour donner sélectivement de l'énergie à un enroulement (13) primaire d'un transformateur (12), et qui comprend un transistor (18) de commutation à tension zéro du côté primaire, le procédé comprenant :
recevoir une mesure d'une période d'un courant par le transistor (18) de commutation à tension zéro du côté primaire, dans lequel le transistor (18) de commutation à tension zéro est connecté à un enroulement (19) auxiliaire du côté primaire du transformateur (12) et à un condensateur (111), et permettre la fermeture à tension zéro de l'interrupteur (15) de transistor primaire en débloquant le transistor (18) de commutation à tension zéro peu avant que l'interrupteur (15) de transistor primaire soit fermé, et en fixant un temps de déblocage du transistor (18) de commutation à tension zéro sur la base de la mesure,
dans lequel :
- la mesure indique une tension aux bornes du condensateur (111) monté en série avec le transistor (18) de commutation à tension zéro, dans lequel l'unité de commande est configurée pour fixer le temps de déblocage sur la base d'un temps allant du déblocage du transistor (18) de commutation à tension zéro jusqu'à un minimum de la tension aux bornes du condensateur ; ou
- la mesure indique une tension de sortie d'un diviseur (60, 61) capacitif compris dans le convertisseur d'injection de courant en mode avant et monté en parallèle avec le condensateur (111), qui est monté en série avec le transistor (18) de commutation à tension zéro, dans lequel l'unité de commande est configurée pour fixer le temps de déblocage sur la base d'un temps entre le déblocage du transistor (18) de commutation à tension zéro et la tension de sortie du diviseur (60, 61) capacitif devenant positive ; ou
- la mesure indique une tension aux bornes du transistor (18) de commutation à tension zéro, dans lequel l'unité de commande est configurée pour fixer le temps de déblocage sur la base d'un temps pendant lequel la tension aux bornes du transistor (18) de commutation à tension zéro est positive.
